# EUROPÄISCHE PATENTSCHRIFT

(11) **EP 1 251 944 B1**
(45) Veröffentlichungstag und Bekanntmachung des Hinweises auf die Patenterteilung: **01.10.2003**
(21) Anmeldenummer: 00993694.9
(22) Anmeldetag: 21.12.2000
(51) Int. Cl.: B01D 63/08

(54) **VORRICHTUNG UND ANLAGE ZUR CROSSFLOW-FILTRATION**
DEVICE AND ASSEMBLY FOR CROSS-FLOW FILTRATION
DISPOSITIF ET INSTALLATION POUR LA FILTRATION A CONTRE-COURANT

(30) Priorität: 05.01.2000 DE 10000186
(43) Veröffentlichungstag der Anmeldung: 30.10.2002
(73) Patentinhaber: SARTORIUS AG, 37075 Göttingen (DE)
(72) Erfinder: DIEL, Bernhard, 37124 Rosdorf (DE)
(74) Vertreter: Müller-Boré & Partner Patentanwälte
(86) Internationale Anmeldenummer: EP0013071
(87) Internationale Veröffentlichungsnummer: WO01049400

(56) Entgegenhaltungen:
- EP-A- 0 345 209
- EP-A- 0 498 211
- GB-A- 2 343 853
- US-A- 3 933 647
- US-A- 4 597 868

## Beschreibung

Die Erfindung betrifft eine Vorrichtung und eine Anlage zur Crossflow-Filtration, die zur Behandlung flüssiger Medien in den Bereichen der Umkehrosmose, Nanofiltration, Dialyse, Ultrafiltration und Mikrofiltration eingesetzt wird.

Vorrichtungen zur Crossflow-Filtration mit Filterkassetten bestehen neben Armaturen, Pumpen und Hilfseinrichtungen generell aus einem Halter, Filterkassetten und Einspannplatten. Der Halter nimmt die Einspannplatten und mindestens eine Filterkassette auf, welche zwischen den Einspannplatten dichtend eingepreßt wird. Dazu sind die Einspannplatten auf dem Halter aufeinander zu beweglich angeordnet. Die Einspannplatten und die Filterkassetten haben gegenüberliegende planare Vorder- und Rückflächen sowie gegenüberliegende schmale erste und zweite Seitenwände und gegenüberliegende schmale erste und zweite Kantenwände. Mindestens eine Einspannplatte ist als Verteilerplatte mit Anschlüssen für die Zuführung von zu filtrierender Speiseflüssigkeit in die Filterkassetten und für die Abführung von Konzentrat und Filtrat aus den Filterkassetten ausgebildet. Erfolgt die Zuführung und/oder Abführung der Fluide lediglich an einer Fläche der Verteilerplatte, spricht man von einer monodirektionalen Verteilerplatte, und erfolgt die Zuführung und/oder Abführung der Fluide an der Vorder- und Rückfläche der Verteilerplatte, spricht man von einer bidirektionalen Verteilerplatte. Im letzten Fall sind die Filterkassetten beidseitig an der Vorder- und Rückfläche der Verteilerplatte angeordnet. In der DE-OS 34 41 249 werden Filterkassetten und eine Vorrichtung zur Crossflow-Filtration mit den Filterkassetten beschrieben, bei der die Filterkassetten zwischen zwei monodirektionalen Einspannplatten eingespannt sind. Die eine ist als Verteilerplatte für die Zuführung von zu filtrierender Speiseflüssigkeit und die Abführung von Konzentrat und die andere als Sammelplatte für die Abführung von Filtrat mit den entsprechenden Anschlüssen ausgebildet. Die US-PS 47 15 955 beschreibt eine Vorrichtung aus Halter, Filterkassette und Einspannplatten, wobei eine der Einspannplatten als monodirektionale Verteilerplatte ausgebildet ist und an der sämtliche Anschlüsse fiir die Zuführung und Abführung der Fluide angeordnet sind. Eine Ausgestaltung dieser Verteilerplatte als bidirektionale Verteilerplatte wird in der EP 0 345 209 B vorgeschlagen. Nachteilig ist bei all diesen Vorrichtungen, daß die Crossflow-Filtrationskapazität derartiger Vorrichtungen durch die Anzahl der Filterkassetten, die zwischen den Verteiler- und Sammelplatten angeordnet werden kann, begrenzt ist. Die Anzahl der Filterkassetten beträgt je nach Kassettenaufbau und Pumpenkapazität der Crossflow-Vorrichtung beziehungsweise -Anlage zwischen einer und 7 bis 10. Bei einer größeren Anzahl von Filterkassetten führt ein anströmseitiger Druckverlust zu einer ungleichmäßigen Überströmung der Membranflächen und somit zu einer ungleichmäßigen Ausnutzung der Membranflächen der Filterkassetten, was eine vorzeitige Verblockung der Membranen und eine Verminderung der Crossflow-Filtrationsleistung zur Folge hat.
Die den Filterkassetten zugewandten Flächen der Verteiler- und Sammelplatten weisen untereinander beabstandete Öffnungen auf, die mit entsprechenden Öffnungen der an die Platte anzuschließenden Filterkassetten übereinstimmen. In den Filterkassetten liegen in der Regel die Öffnungen für die Zuführung von zu filtrierender Speiseflüssigkeit und ein erster Teil der Öffnungen für die Abführung von Filtrat auf einer parallel zur ersten schmalen Kantenwand verlaufenden Geraden, und die Öffnungen fiir die Abrührung von Konzentrat und ein zweiter Teil der Öffnungen für die Abführung von Filtrat auf einer parallel zur zweiten schmalen Kantenwand verlaufenden Geraden. Die den Öffnungen der Filterkassette zugeordneten Öffungen der Verteiler- und Sammelplatten münden in einen entsprechenden Kanal, der parallel zu einer der schmalen Kantenwände sowie zu der Vorder- und Rückfläche der Platte verläuft. Der jeweilige Kanal tritt auf mindestens einer der Seitenwände aus der Verteiler- und Sammelplatte aus. Gemäß der US-PS 47 15 955 und der EP 0 345 209 B münden entweder die Öffnungen für die Abführung von Filtrat oder die Öffnungen für die Zuführung der Speiseflüssigkeit und die Abführung von Konzentrat unter einem spitzen Winkel bezüglich der Vorder- beziehungsweise der Vorder- und der Rückfläche in den entsprechenden Kanal. Nach der EP 0 498 211 B1 sind die Öffnungen für die Abführung von Filtrat über auf der Vorderfläche der Verteilerplatte befindliche Filtratleitungsstrecken mit einem mittig angeordneten Kanal verbunden.
Weitere Nachteile der Vorrichtungen des Standes der Technik bestehen darin, daß eine große Anzahl von Anschlüssen an den Einspannplatten vorhanden ist, was mit hohen Kosten verbunden ist und eine Quelle für Leckagen und Kontaminationen darstellt. Dabei ist es besonders nachteilig, wenn ausgerechnet auf der Filtratseite (Reinseite) die Anzahl der Anschlüsse hoch ist.
Verteilerplatten mit sämtlichen Anschlüssen in einer Platte haben darüberhinaus den Nachteil eines hohen Herstellungsaufwands, weil die Bohrungen, Kanäle und Filtratleitungsstrecken auf engem Raum untergebracht werden müssen. Auf Grund des geringen Platzes auf den schmalen Seitenwänden müssen die Kanalanschlüsse häufig auf beiden gegenüberliegenden Seitenwänden installiert werden, was die Zugänglichkeit der Anschlüsse und die Aufstellmöglichkeit der Vorrichtung in engen Räumen einschränkt. Gemäß der WO 96/28240 ist der Kanal für die Zuführung der Speiseflüssigkeit auf der Rückfläche der Verteilerplatte angebracht, wodurch die Vorrichtung in ihrer Variabilität eingeschränkt ist, denn diese Platte muß zwangsläufig als monodirektionale Verteilerendplatte installiert werden.

Der Erfindung liegt die Aufgabe zugrunde, eine Vorrichtung und Anlage zur Crossflow-Filtration mit Filterkassetten vorzuschlagen, die auf Grund einer geringen Anzahl von Anschlüssen und einfacher Einspannplatten kostengünstig herstellbar ist, sich durch eine hohe Variabilität bezüglich der Kapazitätsanpassung an die geforderte Crossflow-Filtrationsleistung und eine hohe Betriebsdauer auszeichnet.

Die Aufgabe wird durch den Gegenstand der Ansprüche 1 und 5 gelöst. Vorteilhafte Weiterbildungen der Erfindung sind durch die Merkmale der Unteransprüche definiert.

Die erfindungsgemäße Vorrichtung zur Crossflow-Filtration wird in Anspruch 1 definiert.

Die mindestens eine Filterkassette bildet in der Regel einen Modulblock, der aus zwei bis etwa 10 Filterkassetten besteht, vorzugsweise aus 4 bis 5 Filterkassetten.
Durch den Aufbau der Filtrationssegmente ist nur noch eine jedem Filtrationssegment gemeinsame Sammelplatte erforderlich, über die das Filtrat aus den beiden Abfolgen von mindestens einer Filterkassette, einer Verteilerplatte und mindestens einer weiteren Filterkassette abgeführt wird. Dadurch sind für vier Filterkassetten oder vier Modulblöcke nur noch zwei Filtratanschlüsse erforderlich an Stelle von mindestens vier Filtratanschlüssen nach dem Stand der Technik. Außerdem wird durch den Aufbau der Filtrationssegmente eine modulare Erweiterung der Vorrichtung mit einer Vielzahl von Filtrationssegmenten ermöglicht, deren Anzahl lediglich aus Praktikabilitätsgründen begrenzt ist. Damit kann die Vorrichtung in Übereinstimmung mit den jeweiligen Filtrationsanforderungen an die erforderliche Filtrationskapazität variabel angepaßt werden. Durch die Abfolge von mindestens einer Filterkassette (eines Modulblocks), einer Verteilerplatte und mindestens einer weiteren Filterkassette (eines weiteren Modulblocks) in dem Filtrationssegment ist sichergestellt, daß jede der Verteilerplatte benachbarte Filterkassette beziehungsweise jeder der Verteilerplatte benachbarte Modulblock analog angeströmt wird, ohne daß zusätzliche Maßnahmen dazu erforderlich wären. Im Falle der Verwendung von vier Filterkassetten oder von vier Modulblöcken wäre dazu bei einer Vorrichtung nach dem Stand der Technik die zusätzliche Verwendung einer Trennplatte zwischen den mittig liegenden benachbarten Filterkassetten beziehungsweise Modulblöcken erforderlich.

In einer bevorzugten Ausführungsform der Erfindung, wo die Filterkassetten und die als Endplatten, als Trennplatten, als Verteilerplatten und als Sammelplatten ausgebildeten Einspannplatten gegenüberliegende planare Vorder- und Rückflächen, gegenüberliegende schmale Seitenwände und gegenüberliegende schmale Kantenwände aufweisen, besitzen die Verteilerplatten für die Zuführung von Speiseflüssigkeit und für die Abführung von Konzentrat an den Vorder- und Rückflächen untereinander beabstandete Öffnungen, die mit sämtlichen Öffnungen der Filterkassetten korrespondieren und wobei die Öffnungen für die Zuführung von Speiseflüssigkeit und für die Abführung von Konzentrat jeweils in parallel zu den Vorder- und Rückflächen sowie zu den Kantenwänden verlaufenden Kanälen für die Zuführung von Speiseflüssigkeit und für die Abführung von Konzentrat unter Austritt auf mindestens einer der mit Anschlüssen versehenen Seitenwände münden. Dagegen erstrecken sich die Öffnungen für Filtrat von der Vorder- zur Rückfläche und parallel zu den Kantenwänden. Die Sammelplatten für die Abführung von Filtrat, weisen an den Vorder- und Rückflächen lediglich beabstandete Öffnungen auf, die mit den entsprechenden Öffnungen der Filterkassetten für Filtrat korrespondieren. Die Öffnungen münden in jeweils in parallel zu den Vorder- und Rückflächen sowie zu den Kantenwänden verlaufenden Kanälen für die Abführung von Filtrat, welche auf mindestens einer der mit Anschlüssen versehenen Seitenwände austreten. Durch den Fortfall der Kanäle für die Abrührung von Filtrat in den Verteilerplatten und die Begrenzung der Öffnungen in den Sammelplatten auf solche für Filtrat sind derartige Einspannplatten kostengünstig herstellbar.
In einer weiteren Ausführungsform der Erfindung sind benachbarte Filtrationssegmente durch eine einzige als Trennplatte wirkende Endplatte von einander getrennt. Derartige Trennplatten haben wie die Endplatten keinerlei Öffnungen und Kanäle und sind somit kostengünstig herstellbar.
Die erfindungsgemäße Ausführung der Verteiler- und Sammelplatten gestattet es, in einer weiteren vorteilhaften Ausführungsform sämtliche Anschlüsse für die Kanäle auf einer der Seitenwände anzubringen. Das ist besonders wichtig, für eine platzsparende Installation der erfindungsgemäßen Vorrichtungen in kleinen Räumen, wo sie unmittelbar neben einer Wand aufgestellt werden können, weil nur von einer Seite Zugang zur Vorrichtung erforderlich ist.
Mit Ausnahme der planaren Vorder- und Rückflächen können die Einspannplatten eine von den Filterkassetten unterschiedliche äußere Kontur aufweisen. So können sie zum Beispiel eine polygonale, kreisrunde oder ovale Form haben. In derartigen Ausführungen werden unter gegenüberliegenden schmalen Seiten- und Kantenwänden solche verstanden, die sich durch Projezierung der entsprechenden Seiten- und Kantenwände der Filterkassetten auf den Einspannplatten ergeben würden.

An Vorrichtungen, die aus einem Filtrationssegment aufgebaut sind, kann vorzugsweise eine feste Verrohrung der Reinseite (Filtratsammelplatte mit der Leitung für die Abführung von Filtrat) erfolgen, was für den Pharmabereich besonders wichtig ist.

Die erfindungsgemäße Anlage zur Crossflow-Filtration mit Filterkassetten besteht aus mindestens zwei Vorrichtungen der vorstehend genannten Art, die über gemeinsame Leitungen für die Zuführung von Speiseflüssigkeit, für die Abführung von Konzentrat und für die Abführung von Filtrat mit einander verbunden sind. Platz- und kostensparend ist eine bevorzugte Ausführungsform, bei der sämtliche Ausgänge an den Verteiler- und Sammelplatten auf einer Seitenwand liegen.
Filtration, Reinigung, Spülung und Sterilisation der Vorrichtungen und der Anlagen wird computergesteuert betrieben, wozu die Anschlüsse an den Verteiler- und Sammelplatten und die Leitungen mit dem Fachmann geläufigen Durchflußmessem und/oder Drucksensoren sowie steuerbaren Ventilen ausgestattet sind und über die Leitungen Reinigungs-, Spül- und Sterilisationsmedien zu- und abgeführt werden. Besonders vorteilhaft ist es, daß einzelne Vorrichtungen oder einzelne Filtrationssegmente abgeschaltet werden können oder den genannten Operationen separat unterworfen werden können, wobei die übrigen Vorrichtungen oder Filtrationssegmente der Anlage oder Vorrichtung im Filtrationsbetrieb verbleiben.

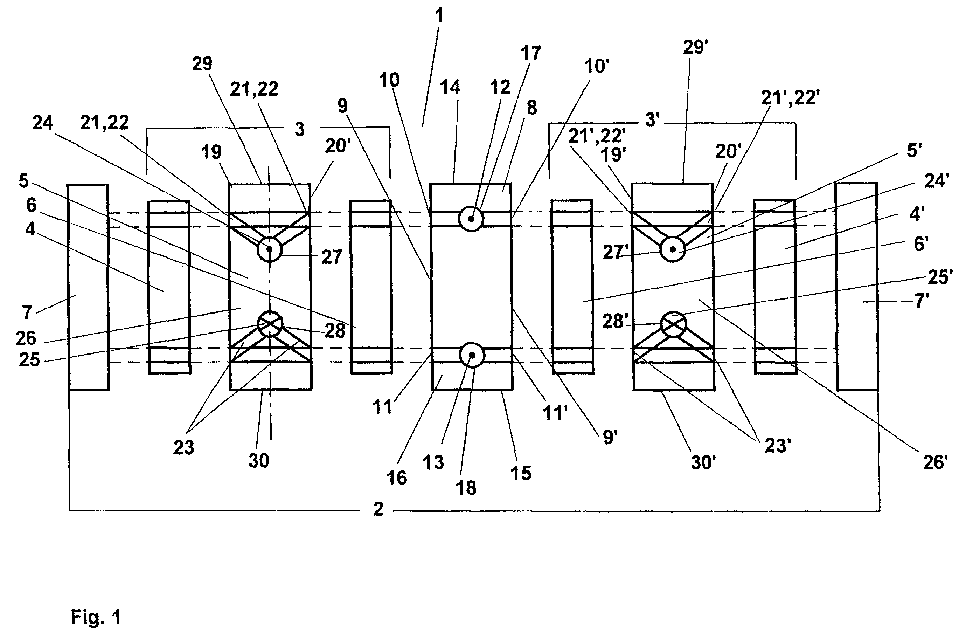

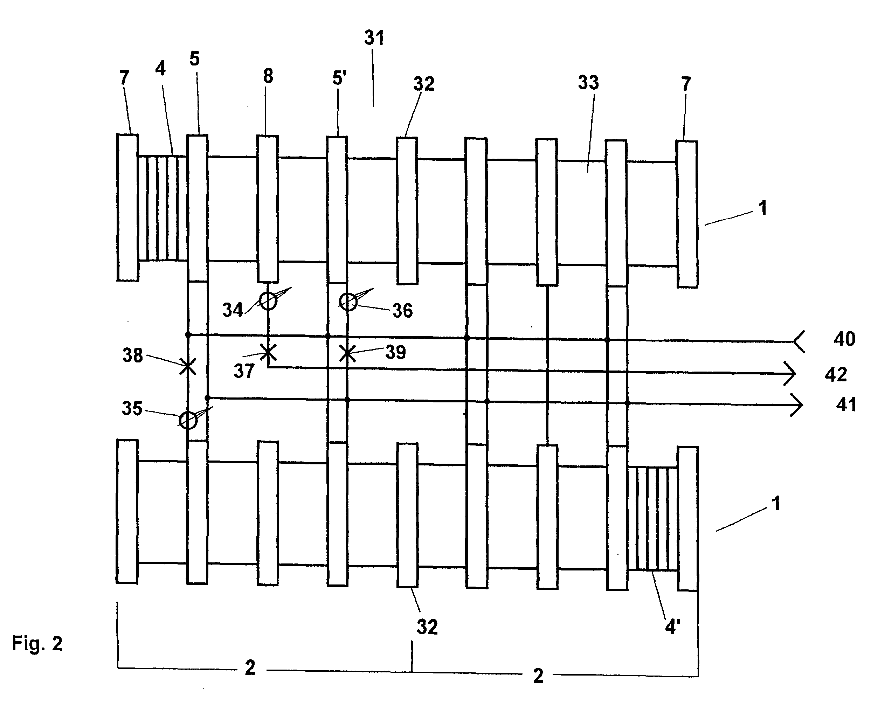

Die Erfindung wird nun anhand der Figuren 1 und 2 näher erläutert.
Dabei zeigen
Fig. 1 eine schematische Explosionsdarstellung eines Filtrationssegmentes einer erfindungsgemäßen Vorrichtung und
Fig. 2 eine schematische Darstellung einer Ausführungsform einer erfindungsgemäßen Anlage.

Gemäß der Figur 1 besteht die Vorrichtung **1** zur Crossflow-Filtration aus einem Filtrationssegment **2**, welches auf einem nicht dargestellten Halter angeordnet ist. Das Filtrationssegment **2** wird von zwei Abfolgen **3**, **3'** aus einer Filterkassette **4**, **4'**, einer Verteilerplatte **5**, **5'** und einer weiteren Filterkassette **6**, **6'** gebildet, die zwischen zwei Endplatten **7**, **7'** angeordnet sind und durch eine gemeinsame Sammelplatte **8** mit einander verbunden sind. Die Sammelplatte **8** dient der Abführung von Filtrat und besitzt an ihren Vorder- **9** und Rückflächen **9'** untereinander beabstandete Öffnungen **10**, **10'** und untereinander beabstandete Öffnungen **11**, **11'**, die mit den entsprechenden Öffnungen für Filtrat der Filterkassetten **4**, **4'**, **6**, **6'** korrespondieren. Sie münden in Kanäle **12**, **13** für die Abrührung des Filtrats, welche parallel zu den Vorder- **9** und Rückflächen **9'** sowie zu den Kantenwänden **14**, **15** verlaufen. Die Kanäle **12**, **13** treten auf der Seitenwand **16** aus, wo sie mit Anschlüssen **17**, **18** ausgestattet sind. Die Verteilerplatten **5**, **5'** dienen der Zuführung von Speiseflüssigkeit und der Abführung von Konzentrat und besitzen an den Vorder- **19**, **19'** und Rückflächen **20**, **20'** untereinander beabstandete Öffnungen für Filtrat **21**, **21'**, für die Zuführung der Speiseflüssigkeit **22**, **22'** und für die Abführung von Konzentrat **23**, **23'**, die mit sämtlichen Öffnungen der Filterkassetten korrespondieren. Die Öffnungen **22**, **22'** münden spitzwinklig in Kanäle für die Zuführung von Speiseflüssigkeit **24**, **24'** beziehungsweise die Öffnungen **23**, **23'** in Kanäle für die Abführung von Konzentrat **25**, **25'** oder umgekehrt bei Feedumkehrung, welche auf der Seitenwand **26**, **26'** austreten, wo sie mit Anschlüssen **27**, **27'**, **28**, **28'** versehen sind. Die Kanäle **24**, **24'** und **25**, **25'** verlaufen parallel zu den Vorder- **19, 19'** und Rückflächen **20**, **20'** sowie zu den Kantenwänden **29**, **29'**, **30**, **30'** der Verteilerplatten **5**, **5'**. Die Öffnungen für Filtrat **21**, **21'** erstrecken sich von der Vorder- **19**, **19'** zur Rückfläche **20**, **20'** und parallel zu den Kantenwänden **29**, **29'**, **30**, **30'**.
Die in der Figur 2 dargestellte Anlage **31** besteht aus zwei Vorrichtungen zur Crossflow-Filtration **1** aus je zwei durch Trennplatten **32** getrennten Filtrationssegmenten **2**. Zwischen den Einspannplatten **7**, **5**, **8**, **5'**, **32** sind Modulblöcke **33** aus je **5** Filterkassetten **4, 4'** dichtend eingepreßt. Die Anschlüsse für die Abführung von Filtrat **17**, **18** (Fig. 1), die Anschlüsse für die Abführung von Konzentrat **28**, **28'** (Fig. 1) und die Anschlüsse für die Zuführung von Speiseflüssigkeit **27**, **27'** (Fig. 1) sind mit Druck- oder Durchflußmessern **34**, **35**, **36** und Ventilen **37**, **38**, **39** ausgerüstet, zumindest aber die gemeinsamen Leitungen, und jeweils über gemeinsame Leitungen für die Zuführung von Speiseflüssigkeit **40**, für die Abführung von Konzentrat **41** und für die Abführung von Filtrat **42** mit einander verbunden.
Zur Durchführung der Filtration wird die zu filtrierende Speiseflüssigkeit unter Druck über die Leitung **40** mittels der Ventile **38**, der Anschlüsse **27**, **27'** (Fig. 1) , der Verteilerplatten **5**, **5'** in die Modulblöcke **33** gepumpt, wo sie die Membranen der Filterkassetten **4**, **4'** überströmt und als Konzentrat über die Anschlüsse **28**, **28'** (Fig. 1), Ventile **39** und die gemeinsame Leitung **41** abgeführt wird. Der durch die Membranen permeiernde Teil wird als Filtrat über die Anschlüsse **17**, **18** (Fig. 1), die Ventile **37** und die gemeinsame Leitung **42** abgeführt.

### Liste der Bezugszeichen

- 1: Vorrichtung zur Crossflow-Filtration
- 2: Filtrationssegment
- 3, 3': Abfolgen
- 4, 4': Filterkassette
- 5, 5': Verteilerplatte
- 6, 6': weitere Filterkassette
- 7, 7': Endplatten
- 8: gemeinsame Sammelplatte
- 9, 9': Vorder- und Rückflächen
- 10, 10', 11, 11': untereinander beabstandete Öffnungen
- 4, 4', 6, 6': Öffnungen für Filtrat der Filterkassetten
- 12, 13: Kanäle für die Abführung des Filtrats
- 14, 15: Kantenwände
- 16: Seitenwand
- 17, 18: Anschlüsse für die Abführung von Filtrat
- 19, 19': Vorderflächen der Verteilerplatte
- 20, 20': Rückflächen der Verteilerplatte
- 21, 21': Öffnungen für Filtrat
- 22, 22': Öffnungen für die Zuführung der Speiseflüssigkeit
- 23, 23': Öffnungen für die Abführung von Konzentrat
- 24, 24': Kanäle für die Zuführung von Speiseflüssigkeit
- 25, 25': Kanäle für die Abführung von Konzentrat
- 26, 26': Seitenwand
- 27, 27': Anschlüsse für die Zuführung von Speiseflüssigkeit
- 28, 28': Anschlüsse für die Abführung von Konzentrat
- 29, 29', 30, 30': Kantenwände der Verteilerplatten 5, 5'
- 31: Anlage
- 32: Trennplatte
- 33: Modulblöcke
- 34, 35, 36: Druck- oder Durchflußmesser
- 37, 38, 39: Ventile
- 40: Leitung für die Zuführung von Speiseflüssigkeit
- 41: Leitung für die Abführung von Konzentrat
- 42: Leitung für die Abführung von Filtrat.

## Patentansprüche

1. Vorrichtung zur Crossflow-Filtration (1) bestehend aus einem Halter und mindestens einem Filtrationssegment (2) aus Einspannplatten und dazwischen dichtend eingepreßten Filterkassetten (4, 4', 6, 6'), wobei die Einspannplatten, welche als Endplatten (7, 7'), als Trennplatten (32), als Verteilerplatten (5, 5') und als Sammelplatten (8) ausgebildet sind, und die Filterkassetten (4, 4', 6, 6') auf dem Halter aufeinander zu beweglich angeordnet sind, wobei
das mindestens eine Filtrationssegment (2) aus zwei Abfolgen (3, 3') von mindestens einer Filterkassette (4; 4'), einer bidirektionalen Verteilerplatte (5; 5') mit einer Vorderfläche (19; 19') und einer hierzu entgegengesetzten Rückfläche (20; 20') und mindestens einer weiteren Filterkassette (6; 6') besteht,
wobei die eine Filterkassette (4; 4') an der Vorderfläche (19; 19') und die weitere Filterkassette (6; 6') an der Rückfläche (20; 20') der Verteilerplatte (5; 5') angeordnet ist **dadurch gekennzeichnet, daß**
die Abfolgen (3, 3') zwischen zwei Endplatten (7, 7') angeordnet sind und durch eine gemeinsame Sammelplatte (8) mit einer Vorderfläche (9) und einer hierzu entgegengesetzten Rückfläche (9') für die Abführung von Filtrat miteinander verbunden sind, wobei die eine (3) der Abfolgen (3, 3') an der Vorderfläche (9) und die andere (3') der Abfolgen (3, 3') an der Rückfläche (9') der Sammelplatte (8) angeordnet ist.

2. Vorrichtung (1) nach Anspruch 1, bei der
die Filterkassetten (4, 4', 6, 6') und die Einspannplatten gegenüberliegende planare Vorder- und Rückflächen (9, 9'), gegenüberliegende schmale Seitenwände (16, 26, 26') und gegenüberliegende schmale Kantenwände (14, 15, 29, 29', 30, 30') aufweisen und die Verteilerplatten (5, 5') für die Zuführung von Speiseflüssigkeit und für die Abführung von Konzentrat an den Vorder- und Rückflächen (9, 9') untereinander beabstandete Öffnungen (22, 22', 23, 23') aufweisen, die mit sämtlichen Öffnungen der Filterkassetten (4, 4', 6, 6') korrespondieren und die Öffnungen für die Zuführung von Speiseflüssigkeit (22, 22') und für die Abführung von Konzentrat (23, 23') jeweils in parallel zu den Vorder- und Rückflächen (9, 9') sowie zu den Kantenwänden (29, 29', 30, 30') verlaufenden Kanälen für die Zuführung von Speiseflüssigkeit (24, 24') und für die Abführung von Konzentrat (25, 25') unter Austritt auf mindestens einer der mit Anschlüssen (27, 27', 28, 28') versehenen Seitenwände (26, 26') münden und die Öffnungen fiir Filtrat (21, 21') sich von der Vorder- zur Rückfläche (9, 9') und parallel zu den Kantenwänden (29, 29', 30, 30') erstrecken,
die Sammelplatten (8) für die Abführung von Filtrat an den Vorder- und Rückflächen (9, 9') beabstandete Öffnungen (10, 10', 11, 11') aufweisen, die mit den entsprechenden Öffnungen der Filterkassetten (4, 4', 6, 6') fiir Filtrat korrespondieren und die Öffnungen für die Abführung von Filtrat jeweils in parallel zu den Vorder- und Rückflächen (9, 9') sowie zu den Kantenwänden (14, 15) verlaufenden Kanälen für die Abführung von Filtrat (12, 13) unter Austritt auf mindestens einer der mit Anschlüssen (17, 18) versehenen Seitenwände (16) münden.

3. Vorrichtung (1) nach Anspruch 1 und 2, bei der
benachbarte Filtrationssegmente (2) durch eine als Trennplatte (32) wirkende Endplatte (7, 7') von einander getrennt sind.

4. Vorrichtung (1) nach den Ansprüchen 1 bis 3, bei der
sämtliche Anschlüsse (27, 27', 28, 28', 17, 18) für die Kanäle (24, 24', 25, 25', 12, 13) auf einer der Seitenwände (16, 26, 26') angebracht sind.

5. Anlage (31) zur Crossflow-Filtration mit Filterkassetten (4, 4', 6, 6'), die aus mindestens zwei Vorrichtungen (1) gemäß den Ansprüchen 1 bis 4 besteht, die über gemeinsame Leitungen für die Zuführung von Speiseflüssigkeit (40), für die Abführung von Konzentrat (41) und für die Abführung von Filtrat (42) mit einander verbunden sind.

## Claims

1. Device for crossflow filtration (1), comprising a holder and at least one filtration segment (2) consisting of clamping plates and filter cassettes (4, 4', 6, 6') pressed in between in a sealing manner, the clamping plates, which are designed as end plates (7, 7'), as separation plates (32), as distribution plates (5, 5') and as collection plates (8), and the filter cassettes (4, 4', 6, 6') being arranged on the holder such as to be movable towards one another, wherein the at least one filtration segment (2) comprises two sequences (3, 3') of at least one filter cassette (4; 4'), a bidirectional distribution plate (5; 5') with a front surface (19; 19') and a rear surface (20; 20') opposed thereto, and at least one further filter cassette (6, 6'), the one filter cassette (4; 4') being arranged on the front surface (19; 19') and the filter cassette (6; 6') being arranged on the rear surface (20; 20') of the distribution plate (5; 5'), **characterized in that** the sequences (3, 3') are arranged between two end plates (7, 7') and are connected to one another by a common collection plate (8), having a front surface (9) and a rear surface (9') opposed thereto, for the discharge of filtrate one (3) of the sequences (3, 3') being arranged on the front surface (9) and the other (3') of the sequences (3, 3') being arranged on the rear surface (9') of the collection plate (8).

2. Device (1) according to Claim 1, in which the filter cassettes (4, 4', 6, 6') and the clamping plates have opposite, planar front and rear surfaces (9, 9'), opposite narrow side walls (16, 26, 26') and opposite narrow edge walls (14, 15, 29, 29', 30, 30'), and the distribution plates (5, 5') for the supply of feed liquid and for the discharge of concentrate have at the front and rear surfaces (9, 9') spaced-apart openings (22, 22', 23, 23') which correspond with all the openings of the filter cassettes (4, 4', 6, 6'), and the openings for the supply of feed liquid (22, 22') and for the discharge of concentrate (23, 23'), while emerging on at least one of the side walls (26, 26') provided with connections (27, 27', 28, 28'), open in each case into passages running parallel to the front and rear surfaces (9, 9') and to the edge walls (29, 29', 30, 30') and intended for the supply of feed liquid (24, 24') and for the discharge of concentrate (25, 25'), and the openings for filtrate (21, 21') extend from the front to the rear surface (9, 9') and parallel to the edge walls (29, 29', 30, 30'), the collection plates (8) for the discharge of filtrate have at the front and rear surfaces (9, 9') spaced-apart openings (10, 10', 11, 11') which correspond with the corresponding openings of the filter cassettes (4, 4', 6, 6') for filtrate, and the openings for the discharge of filtrate, while emerging on at least one of the side walls (16) provided with connections (17, 18), open in each case into passages running parallel to the front and rear surfaces (9, 9') and to the edge walls (14, 15) and intended for the discharge of filtrate (12, 13).

3. Device (1) according to Claims 1 and 2, in which adjacent filtration segments (2) are separated from one another by an end plate (7, 7') acting as separation plate (32) .

4. Device (1) according to Claims 1 to 3, in which all the connections (27, 27', 28, 28', 17, 18) for the passages (24, 24', 25, 25', 12, 13) are provided on one of the side walls (16, 26, 26').

5. Arrangement (31) for crossflow filtration with filter cassettes (4, 4', 6, 6') which comprises at least two devices (1) according to Claims 1 to 4, which are connected to one another via common lines for the supply of feed liquid (40), for the discharge of concentrate (41) and for the discharge of filtrate (42).

## Revendications

1. Dispositif de filtration à contre-courant (1) composé d'un support et d'au moins un segment de filtration (2) composé de plaques de serrage avec des cassettes de filtrage (4, 4', 6, 6'), pressées de façon étanche entre les plaques de serrage, les plaques de serrage réalisées sous forme de plaques d'extrémité (7, 7'), de plaques de séparation (32), de plaques de distribution (5, 5') et de plaques de collection (8), les cassettes de filtrage (4, 4', 6, 6') étant disposé sur le support de façon déplaçable l'un vers l'autre, au moins un segment de filtration (2) comprenant deux séquences (3, 3') d'au moins une cassette de filtrage (4; 4'), d'une plaque de distribution bidirectionnelle (5; 5') avec une surface frontale (19; 19') et avec une surface arrière (20; 20') opposée à cette dernière, et d'au moins une cassette de filtrage supplémentaire (6; 6'), l'une des cassettes de filtrage (4; 4') étant disposée sur la surface frontale (19; 19') et la cassette de filtrage supplémentaire (6; 6') étant disposée sur la surface arrière (20; 20') de la plaque de distribution (5; 5'), **caractérisé en ce que** :
les séquences (3, 3') sont disposés entre deux plaques d'extrémité (7, 7') en étant réunies l'une à l'autre au moyen d'une plaque de collection commune (8) avec une surface frontale (9) et une surface arrière (9') opposée à cette dernière pour l'enlèvement du filtrat, l'une (3) des séquences (3, 3') étant disposée sur la surface frontale (9) et l'autre (3') des séquences (3, 3') étant disposée sur la surface arrière (9') de la plaque de collection (8).

2. Dispositif (1) selon la revendication 1, dans lequel :
les cassettes de filtrage (4, 4',6, 6') et les plaques de serrage présentent des surfaces frontales et arrières (9, 9') planes disposées l'une opposée à l'autre, des parois latérales (16, 26, 26') étroites disposées l'une opposée à l'autre et des parois de bord étroites (14, 15, 29, 29', 30, 30') disposées opposée à l'autre, et les plaques de distribution (5, 5') pour l'introduction de liquide d'alimentation et pour l'élimination de concentrat présente, sur les surfaces avant et arrière (9, 9'), des ouvertures situées à distance l'une en dessous de l'autre (22, 22', 23, 23'), correspondant avec le même nombre d'ouverture des cassettes de filtrage (4, 4', 6, 6'), les ouvertures pour l'introduction de liquide d'alimentation (22, 22') et pour l'élimination de concentrat (23, 23') débouchant respectivement dans des canaux parallèles aux surfaces avant et arrière (9, 9') ainsi qu'aux parois de bord (29, 29', 30, 30') pour l'introduction de liquide d'alimentation (24, 24') et pour l'élimination de concentrat (25, 25') avec sorties sur au moins une des parois latérales (26, 26') munies de raccords (27, 27', 28, 28'), les ouvertures pour le filtrat (21, 21') s'étendant à partir des surfaces avant et arrière (9, 9') et parallèle aux parois de bord (29, 29', 30, 30'),
les plaques de collection (8) pour l'élimination du filtrat présentant des ouvertures (10, 10', 11, 11') situées à distance sur les surfaces avant et arrière (9, 9'), les ouvertures correspondant à des ouvertures des cassettes de filtrage (4, 4', 6, 6') pour le filtrat, et les ouvertures pour l'élimination du filtrat débouchant respectivement dans des canaux, parallèles aux surfaces avant et arrière (9, 9') ainsi qu'aux parois de bord (14, 15), pour l'élimination du filtrat (12, 13) avec sorties sur au moins une des parois latérales (16) munies de raccords (17, 18).

3. Dispositif (1) selon la revendication 1, dans lequel :
des segments de filtration consécutifs sont séparées l'un de l'autre par une plaque d'extrémité (7, 7') fonctionnant comme plaque de séparation (32).

4. Dispositif (1) selon les revendications 1 à 3, dans lequel :
touts les raccords (27, 27', 28, 28', 17, 18) pour les canaux (24, 24', 25, 25', 12, 13) sans agencés sur l'une des parois latérales (16, 26, 26').

5. Installation (31) pour la filtration contre-courant avec des cassettes de filtrage (4, 4', 6, 6'), composée d'au moins deux dispositifs (1) selon les revendications 1 à 4 qui sont reliées l'une à l'autre par des conduits communs pour l'introduction de liquide d'alimentation (40), pour l'élimination de concentrat (41) et pour l'élimination de filtrat (42).
